# EUROPEAN PATENT APPLICATION

(11) **EP 4 412 118 A1**
(43) Date of publication of application: **07.08.2024**
(21) Application number: 22901793.4
(22) Date of filing: 30.11.2022
(51) Int. Cl.: H04L 1/00, H04L 1/18, H04W 28/04

(54) **ULTRA WIDE BAND DEVICE FOR TRANSMITTING DATA BY USING NARROW BAND CHANNELS AND OPERATION METHOD THEREFOR**

(30) Priority: 30.11.2021 KR 20210168174
(71) Applicant: Samsung Electronics Co., Ltd., Suwon-si, Gyeonggi-do 16677 (KR)
(72) Inventor: CHOI, Junyoung, Suwon-si, Gyeonggi-do 16677 (KR); KOO, Jonghoe, Suwon-si, Gyeonggi-do 16677 (KR); OH, Hyunseob, Suwon-si, Gyeonggi-do 16677 (KR); LEE, Mingyu, Suwon-si, Gyeonggi-do 16677 (KR)
(74) Representative: Nederlandsch Octrooibureau
(86) International application number: PCT/KR2022/019258
(87) International publication number: WO 2023/101435

(57) **Abstract**

An operation method of a first UWB (ultra wide band) device according to an embodiment of the present disclosure may include the steps of: transmitting, through UWB channels, data from a data round in a data block to a plurality of UWB devices; receiving, through NB (narrow band) channels, first feedback information for the data from a second UWB device from among the plurality of UWB devices; and processing the data on the basis of the first feedback information.

## Description

### [Technical Field]

The disclosure relates to ultra wide band (UWB) communication, and more particularly, to a UWB device that transmits data using an NB channel and a method for operating the same.

### [Background Art]

The Internet has been evolving from a human-centered network where humans create and consume information to an Internet of things (IoT) network where information is exchanged and processed between distributed components such as things. Internet of everything (IoE) technology has also emerged, which combines IoT technology with big data processing technology through connection to a cloud server. To implement IoT, technological elements such as sensing technology, wired and wireless communication and network infrastructure, service interface technology, and security technology are required. Recently, technologies such as sensor network, machine to machine (M2M), and machine type communication (MTC) for connection between things are under study.

In the IoT environment, intelligent Internet technology (IT) services may be provided, which create new values in human life by collecting and analyzing data generated from connected things. IoT may be applied to the fields of smart homes, smart buildings, smart cities, smart cars or connected cars, smart grids, health care, smart home appliances, advanced medical services, and so on through convergence and combination between existing information technology (IT) and various industries.

Along with the development of wireless communication systems, various services may be provided, and thus a method for effectively providing these services is required. For example, ranging technology that measures the distance between electronic devices using an ultra wide band (UWB) and transaction technology that transmits data between electronic devices using a UWB may be used.

### [Detailed Description of the Invention]

### [Technical Problem]

The disclosure proposes a method for transmitting data in real time using an ultra wide band (UWB) channel and a narrow band (NB) channel by a UWB device.

### [Technical Solution]

A method for operating a first ultra wide band (UWB) device according to various embodiments of the disclosure includes transmitting data to a plurality of UWB devices in a data round of a data block though a UWB channel, receiving first feedback information for the data through a narrow band (NB) channel from a second UWB device among the plurality of UWB devices, and processing the data based on the first feedback information.

A method for operating a second UWB device according to various embodiments of the disclosure includes receiving data from a first UWB device in a data round of a data block through a UWB channel, and transmitting feedback information for the data to the first UWB device through an NB channel.

A first UWB device according to various embodiments of the disclosure includes a transceiver and a controller connected to the transceiver and controlling the transceiver. The controller is configured to transmit data to a plurality of UWB devices in a data round of a data block though a UWB channel, receive first feedback information for the data through an NB channel from a second UWB device among the plurality of UWB devices, and process the data based on the first feedback information.

A second UWB device according to various embodiments of the disclosure includes a transceiver and a controller connected to the transceiver and controlling the transceiver. The controller is configured to receive data from a first UWB device in a data round of a data block through a UWB channel, and transmit feedback information for the data to the first UWB device through an NB channel.

### [Advantageous Effects]

An ultra wide band (UWB) device according to an embodiment of the disclosure may efficiently transmit real-time data using a narrow band (NW) channel as well as a UWB channel.

Further, the UWB device according to an embodiment of the disclosure may increase data throughput using an NB channel as well as a UWB channel.

Further, the UWB device according to an embodiment of the disclosure may increase data reception efficiency and reduce power consumption using an NB channel.

### [Brief Description of Drawings]

FIG. 1 illustrates an exemplary architecture of an electronic device according to an embodiment of the disclosure.
FIG. 2 illustrates a communication system including a plurality of electronic devices according to an embodiment of the disclosure.
FIG. 3 illustrates a method for performing communication between a plurality of electronic devices according to an embodiment of the disclosure.
FIG. 4 illustrates the structure of a UWB MAC frame according to an embodiment of the disclosure.
FIGS. 5A and 5B illustrate the structure of a UWB PHY packet according to an embodiment of the disclosure.
FIG. 6 illustrates an exemplary structure of a ranging block and round used for UWB ranging according to an embodiment of the disclosure.
FIG. 7 illustrates an exemplary structure of a ranging round used for UWB ranging according to an embodiment of the disclosure.
FIG. 8 illustrates an exemplary structure of a data block and round used for UWB ranging according to an embodiment of the disclosure.
FIG. 9 illustrates an exemplary retransmission-based data transmission operation of a UWB device according to an embodiment of the disclosure.
FIG. 10 illustrates another exemplary retransmission-based data transmission operation of a UWB device according to an embodiment of the disclosure.
FIG. 11 illustrates an exemplary retransmission-based message format for a UWB device according to an embodiment of the disclosure.
FIG. 12A is a diagram illustrating FEC-based data transmission according to an embodiment of the disclosure.
FIG. 12B illustrates an FEC-based data transmission operation of a UWB device according to an embodiment of the disclosure.
FIG. 13 illustrates an exemplary FEC-based message format for a UWB device according to an embodiment of the disclosure.
FIG. 14 illustrates an exemplary ranging using operation of a UWB device according to an embodiment of the disclosure.
FIG. 15 illustrates the structure of a first UWB device according to an embodiment of the disclosure.
FIG. 16 illustrates the structure of a second UWB device according to an embodiment of the disclosure.

### [Mode for Carrying out the Invention]

Embodiments of the disclosure will be described below in detail with reference to the accompanying drawings.

In describing the embodiments, a description of technical content which is well known in the technical field of the disclosure and not directly related to the disclosure will be avoided. This is done to make the subject matter of the disclosure clearer without obscuring it by omitting an unnecessary description.

For the same reason, some components are shown as exaggerated, omitted, or schematic in the accompanying drawings. In addition, each component is not true to the actual size. In each drawing, the same reference numerals are assigned to the same or corresponding components.

The advantages and features of the disclosure and a method for achieving them will become apparent from reference to embodiments described below in detail in conjunction with the attached drawings. However, the disclosure may be implemented in various manners, not limited to the embodiments set forth herein. Rather, these embodiments are provided such that the disclosure is complete and thorough and its scope is fully conveyed to those skilled in the art, and the disclosure is only defined by the appended claims. The same reference numerals denote the same components throughout the specification.

It will be understood that each block of the flowchart illustrations and combinations of the flowchart illustrations may be implemented by computer program instructions. These computer program instructions may be loaded on a processor of a general purpose computer, a special purpose computer, or other programmable data processing equipment, such that the instructions, which are executed through the processor of the computer or other programmable data processing equipment, create means for implementing the functions specified in the flowchart block(s). These computer program instructions may also be stored in a computer-usable or computer-readable memory that may direct the computer or other programmable data processing equipment to function in a particular manner, such that the instructions stored in the computer-usable or computer-readable memory produce an article of manufacture including instruction means which implement the function specified in the flowchart block(s). The computer program instructions may also be loaded onto the computer or other programmable data processing equipment to cause a series of operations to be performed on the computer or other programmable data processing equipment to produce a computer implemented process such that the instructions which are executed on the computer or other programmable equipment provide operations for implementing the functions specified in the flowchart block(s).

Furthermore, the respective block diagrams may illustrate parts of modules, segments, or codes including one or more executable instructions for performing specific logic function(s). Moreover, it should be noted that the functions of the blocks may be performed in a different order in several alternative implementations. For example, two successive blocks may be performed substantially at the same time, or may be performed in reverse order according to their functions.

The term 'unit' as used herein means, but is not limited to, a software or hardware component, such as a field programmable gate array (FPGA) or application specific integrated circuit (ASIC), which performs certain tasks. A 'unit' may be configured to reside on an addressable storage medium and configured to be executed on one or more processors. Thus, a 'unit' may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided in the components and 'units' may be combined into fewer components and 'units' or further separated into additional components and 'units'. In addition, the components and 'units' may be implemented such that they are executed on one or more CPUs in a device or a secure multimedia card. Further, according to some embodiments, a 'unit' may include one or more processors.

The term 'terminal' or 'device' as used herein may also be replaced by mobile station (MS), user equipment (UE), user terminal (UT), wireless terminal, access terminal (AT), subscriber unit, subscriber station (SS), wireless device, wireless communication device, wireless transmit/receive unit (WTRU), mobile node, mobile, or other terms. Embodiments of a terminal may include a cellular phone, a smart phone with a wireless communication function, a personal digital assistant (PDA) with a wireless communication function, a photographing device with a wireless communication function, such as a digital camera, a gaming device with a wireless communication function, a music storage and playback home appliance with a wireless communication function, an Internet appliance capable of wireless Internet access and browsing, and a portable unit or terminal with an integrated combination of such functions. Further, the terminal may include, but not limited to, a machine to machine (M2M) terminal and a machine type communication (MTC) terminal/device. In the disclosure, a terminal may be referred to as an electronic device or simply as a device.

The operation principle of the disclosure will be described below in detail with reference to the attached drawings. Lest it should obscure the subject matter of the disclosure, a detailed description of a generally known function or structure will be avoided. The terms as described later are defined in consideration of functions in the disclosure, and may be changed according to the intention of a user or an operator, or customs. Therefore, the definitions should be made by the contents through the specification.

An embodiment of the disclosure will be described below in detail with reference to the accompanying drawings. While the embodiment of the disclosure will be described below in the context of a communication system using UWB as an example, it may also be applied to other communication systems with a similar technical background or characteristics. For example, the communication systems may include a communication system using Bluetooth or ZigBee. Accordingly, the embodiment of the disclosure may be applied to other communication systems with some modifications made without significantly departing from the scope of the disclosure at the discretion of those skilled in the art.

Further, lest it should obscure the subject matter of the disclosure, a detailed description of a related function or configuration will be avoided in describing the disclosure. In addition, the terms described below are terms defined in consideration of the functions in the disclosure, and may vary depending on the intention of a user or an operator or customs. Therefore, the definitions should be made by the contents through the specification.

In general, wireless sensor network technology is largely divided into wireless local area network (WLAN) technology and wireless personal area network (WPAN) technology depending on recognized distances. The WLAN is a technology based on IEEE 802.11, which allows for access to a backbone network within a radius of about 100m. The WPAN is a technology based on IEEE 802.15, which includes Bluetooth, ZigBee, and ultra wide band (UWB). A wireless network in which such a wireless network technology is implemented may include a plurality of electronic devices.

According to the definition of the Federal Communications Commission (FCC), UWB may refer to a wireless communication technology in which a bandwidth of 500MHz or larger is used or a bandwidth corresponding to a center frequency is 20% or larger. UWB may also refer to a band itself to which UWB communication is applied. UWB enables safe and accurate ranging between devices. As such, UWB enables relative position estimation based on the distance between two devices or accurate position estimation of a device based on its distances from fixed devices (whose positions are known).

Specific terms used in the following description are provided to aid understanding of the disclosure, and these specific terms may be changed to other forms without departing from the technical spirit of the disclosure.

An "application dedicated file (ADF)" may be, for example, a data structure within an application data structure which may host an application or application specific data.

An "application protocol data unit (APDU)" may be a command and response used when communicating with an application data structure within a UWB device.

"Application specific data" may be, for example, a file structure with a root level and an application level including UWB control information and UWB session data required for a UWB session.

A "controller" may be a ranging device which defines and controls a ranging control message (RCM) (or a control message).

A "controllee" may be a ranging device which uses a ranging parameter included in an RCM (or a control message) received from a controller.

Unlike a "static scrambled timestamp sequence (STS)," a "dynamic STS mode" may be an operation mode in which an STS is not repeated during a ranging session. In this mode, an STS is managed by a ranging device, and a ranging session key that creates the STS may be managed by a secure component.

An "applet" may be, for example, an applet executed on a secure component, including UWB parameters and service data. In the disclosure, an applet may be a FiRa applet defined by FiRa.

A "ranging device" may be a device capable of performing UWB ranging. In the disclosure, the ranging device may be an enhanced ranging device (ERDEV) defined in IEEE 802.15.4z or a FiRa device defined by FiRa. A ranging device may be referred to as a UWB device.

A "UWB-enabled application" may be an application for UWB services. For example, the UWB-enabled application may be an application that uses an out-of-band (OOB) connector, a secure service, and/or a framework API for configuring a UWB service, for a UWB session. In the disclosure, a "UWB-enabled application" may be referred to shortly as an application or a UWB application. The UWB-enabled application may be a FiRa-enabled application defined by FiRa.

A "framework" may be a component which provides access to a profile, an individual UWB configuration, and/or a notification. The "framework" may be a collection of logical software components including, for example, a profile manager, an OOB connector, a secure service, and/or a UWB service. In the disclosure, a framework may be a FiRa framework defined by FiRa.

An "OOB connector" may be a software component to establish an OOB connection (e.g., BLE connection) between ranging devices. In the disclosure, an OOB connector may be a FiRa OOB connector defined by FiRa.

A profile" may be a predefined set of UWB and OOB configuration parameters. In the disclosure, a profile may be a FiRa profile defined by FiRa.

A "profile Manager" may be a software component which implements an available profile on a ranging device. In the disclosure, a profile manager may be a FiRa profile manager defined by FiRa.

A "service" may be an implementation of a use case which provides a service to an end-user.

A "smart ranging device" may be a ranging device capable of implementing an optional framework API. In the disclosure, a smart ranging device may be a FiRa smart device defined by FiRa.

A "global dedicated file (GDF)" may be the root level of application specific data including data required to establish a USB session.

A "framework API" may be an API used by a UWB-enabled application to communicate with a framework.

An "initiator" may be a ranging device which initiates a ranging exchange.

An "object identifier (OID)" may be an identifier of an ADF within an application data structure.

"Out-of-band (OOB)", which is an underlying wireless technology, may be data communication that does not use UWB.

A "ranging data set (RDS)" may be data (e.g., a UWB session key, a session ID, and so on) required to establish a UWB session requiring protection of confidentiality, authenticity, and integrity.

A "responder" may be a ranging device which responds to an initiator in a ranging exchange.

An "STS" may be an encrypted sequence to increase the integrity and accuracy of a ranging measurement timestamp. The STS may be generated from a ranging session key.

A "secure channel" may be a data channel which prevents overhearing and tampering.

A "secure component" may be, for example, an entity (e.g., secure element (SE) or trusted execution environment (TEE)) with a defined security level, which interfaces with a UWBS for the purpose of providing an RDS to the UWBS, when a dynamic STS is used.

A "secure element (SE)" may be a tamper-resistant secure hardware component which may be used as a secure component within a ranging device.

"Secure ranging" may be ranging based on an STS generated through a strong encryption operation.

A "secure service" may be a software component to interface with a secure component, such as an SE or a TEE.

A "service applet" may be an applet on a secure component that handles service-specific transactions.

"Service data" may be data defined by a service provider, which needs to be transmitted between two ranging devices to implement a service.

A "service provider" may be an entity which defines and provides hardware and software required to provide a specific service to an end-user.

"Static STS mode" is an operation mode in which an STS is repeated during a session and does not need to be managed by a secure component.

A "secure UWB service (SUS) applet" may be an applet on an SE, which communicates with an applet to search for data needed to enable a secure UWB session with another ranging device. Further, the SUS applet may transmit the data (information) to a UWBS.

A "UWB service" may be a software component which provides access to a UWBS.

A "UWB session" may be a period from a time when a controller and a controllee start communication via UWB to a time when they stop the communication. The UWB session may include ranging, data forwarding, or both ranging and data forwarding.

A "UWB session ID" may be an ID (e.g., a 32-bit integer) that identifies a UWB session, shared between a controller and a controllee.

A "UWB session key" may be a key used to protect a UWB session. The UWB session key may be used to create an STS. In the disclosure, a UWB session key may be a UWB ranging session key (URSK) and be referred to shortly as a session key.

A "UWB subsystem (UWBS)" may be a hardware component that implements UWB PHY and MAC layers (specifications). The UWBS may have an interface with a framework and an interface with a secure component to search for an RDS. In the disclosure, the UWB PHY and MAC specifications may be, for example, FiRa PHY and FiRa MAC specifications defined by FiRa, which references IEEE 802.15.4/4z.

"One-way ranging (OWR)" may be a ranging method that uses a time difference of arrival (TDoA) localization method. The TDoA method corresponds to a method for locating a mobile device based on relative arrival times of a single message or multiple messages. For a description of OWR (TDoA), the description of IEEE 802.15.4z may be referred to. An example of the OWR method may include a downlink (DL)-TDoA method.

"DL-TDoA (DT)" may be a localization method that uses TDoA measurements from multiple DT-anchors. In an embodiment, DT-anchors may exchange DT messages (DTMs) (ranging messages) with each other, and DT-tags may passively receive these DTMs. In an embodiment, each DT-tag receiving DTMs may calculate a TDoA using at least one of a reception timestamp of each DTM, transmission time stamps of DTMs included in the DTMs, or reply times included in the DTMs. In an embodiment, the DT-tag may estimate its own location using at least one of the calculated TDoAs or the coordinates of the DT-anchors.

"Two-way ranging (TWR)" may be a ranging method that may estimate a relative distance between two devices by measuring a time of flight (ToF) through exchange of ranging messages between the two devices. The TWR method may be one of double-sided two-way ranging (DS-TWR) and single-sided two-way ranging (SS-TWR). SS-TWR may be a procedure of performing ranging through one round-trip time measurement. DS-TWR may be a procedure of performing ranging through two round-trip time measurements. For a description of SS-TWR and DS-TWR, IEEE 802.15.4z may be referred to.

A "UWB message" may be a message including a payload IE transmitted by a UWB device (e.g., ERDEV).

A "ranging message" may be a message transmitted by a UWB device (e.g., ERDEV) in a UWB ranging procedure. For example, the ranging message may be a message such as a ranging initiation message (RIM), a ranging response message (RRM), a ranging final message (RFM), or a measurement report message (MRM), which is transmitted by the UWB device (e.g., ERDEV) in a specific phase of a ranging round. The ranging message may include one or more UWB messages. When needed, a plurality of ranging messages may be combined into one message. For example, in the case of non-deferred DS-TWR ranging, an RFM and an MRM may be combined into one message in a ranging final phase.

A "UWB channel" may be one of candidate UWB channels allocated for UWB communication. The candidate UWB channels allocated for UWB communication may be channels allocated for UWB communication defined in IEEE 802.15.4/4z. The UWB channel may be used for UWB ranging and/or transactions. For example, the UWB channel may be used for transmitting and receiving a ranging frame (RFRAME) and/or a data frame.

A "narrow band (NB) channel" may be a channel with a narrower bandwidth than a UWB channel. The NB channel may be one sub-channel among candidate UWB channels allocated for UWB communication. The candidate UWB channels allocated for UWB communication may be channels allocated for UWB communication defined in IEEE 802.15.4/4z. The NB channel may be used for connection setup for advertising, device discovery, and/or additional parameter negotiation/authentication. For example, the NB channel may be used for transmission and reception of an advertisement message, an additional advertisement message, a connection request message, and/or a connection confirmation message.

In describing the disclosure, a detailed description of a related known function or configuration will be avoided, lest it should obscure the subject matter of the disclosure.

Various embodiments of the disclosure will be described below with reference to the attached drawings.

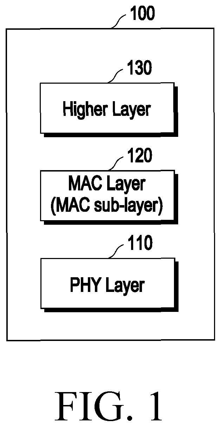

FIG. 1 illustrates an exemplary architecture of an electronic device according to an embodiment of the disclosure.

In the disclosure, the electronic device may be one of various types of electronic devices. For example, the electronic device may be a portable device (e.g., a UE, a smartphone, a wearable device, a vehicle, or a tag device) or a stationary device (e.g., a door lock, an anchor device, or the like).

Referring to FIG. 1, an electronic device 100 may include a PHY layer 110, a MAC layer (MAC sublayer) 120, and/or a higher layer 130.

### (1) PHY layer

The PHY layer 110 may include a low-level control entity and at least one transceiver. In the disclosure, a transceiver may be referred to as an RF transceiver or radio transceiver.

In an embodiment, the at least one transceiver may include a first transceiver supporting UWB communication (e.g., 802.15.4z-based UWB communication), a second transceiver supporting NB communication using a narrower bandwidth than the bandwidth of the UWB communication, and/or a third transceiver supporting other communication technologies (e.g., Bluetooth, BLE, or the like). In the disclosure, the first transceiver may be referred to as a UWB transceiver, the second transceiver may be referred to as an NB transceiver, and the third transceiver may be referred to as an OOB transceiver. According to an embodiment, a single transceiver may support a plurality of communication technologies. For example, a single transceiver may support UWB communication and NB communication.

In an embodiment, the PHY layer 110 may support at least one of the following functions.
- Transceiver activation and deactivation function (transceiver on/off function)
- Energy detection function
   - Channel selection function
   - Clear channel assessment (CCA) function
   - Synchronization function
   - Low-level signaling function
   - UWB ranging, positioning, and localization functions
   - Spectrum resource management function
   - Function of transmitting/receiving a packet through a physical medium

### (2) MAC layer

The MAC layer 120 provides an interface between the higher layer 130 and the PHY layer 120.

In an embodiment, the MAC layer 120 may provide the following two services.
- MAC data service: a service that enables transmission and reception of a MAC protocol data unit (PDU) through the PHY
- MAC management service: a service that interfaces to a MAC sublayer management entity (MLME) service access point (SAP) (MLME-SAP)

In an embodiment, the MAC layer 120 may support at least one of the following functions.
- Device discovery and connection setup functions
- Channel access function (access function for physical channels (e.g., NB channel/UWB channel/OOB channel))
- Synchronization function
- Interference mitigation function based on energy detection
- Functions related to NB signaling
- Guaranteed timeslot (GTS) management function
- Frame delivery function
- UWB ranging function
- PHY parameter change notification function
- Security function

### (3) Higher layer

The higher layer 130 may include a network layer that provides functions such as network configuration and message routing, and/or an application layer that provides an intended function of a device. In an embodiment, the application layer may be a UWB-enabled application layer to provide UWB services.

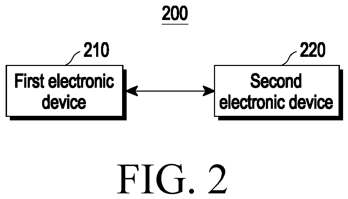

FIG. 2 illustrates a communication system including a plurality of electronic devices according to an embodiment of the disclosure.

Referring to FIG. 2, a communication system 200 may include a first electronic device 210 and a second electronic device 220. In an example, the first electronic device 210 and/or the second electronic device 220 may be the electronic device 100 of FIG. 1.

The first electronic device 210 may communicate with the second electronic device 220, for device discovery, connection setup, ranging (e.g., UWB ranging), data communication, and/or other purposes.

The first electronic device 210 may communicate with the second electronic device 220 using a preset communication scheme (technology). For example, the first electronic device 210 may perform wireless communication with the second electronic device 220 using a UWB communication scheme, an NB communication scheme, and/or an OOB communication scheme.

In the disclosure, the UWB communication scheme may perform communication using at least one of candidate UWB channels allocated for WB communication. An example of candidate UWB channels allocated for UWB communication may be given as illustrated in Table 1 below.

**[Table 1]**

| Band group^{a} (decimal) | Channel number (decimal) | Center frequency,*f*_{c} (MHz) | Band width (MHz) | Mandatory, Optional |
|---|---|---|---|---|
| 0 | 0 | 499.2 | 499.2 | Mandatory below 1 GHz |
| 1 | 1 | 3494.4 | 499.2 | Optional |
| | 2 | 3993.6 | 499.2 | ovtowi |
| | 3 | 4492.8 | 399.2 | Mandatory in low band |
| | 4 | 3993.6 | 1331.2 | Optional |
| 2 | 5 | 6489.6 | 499.2 | Optional |
| | 6 | 6988.8 | 499.2 | Optional |
| | 7 | 6489.6 | 1081.6 | Optional |
| | 8 | 7488.0 | 499.2 | Optional |
| | 9 | 7987.2 | 499.2 | Mandatory in high band |
| | 10 | 8486.4 | 499.2 | Optional |
| | 11 | 7987.2 | 1331.2 | Optional |
| | 12 | 8985.6 | 499.2 | Optional |
| | 13 | 9484.8 | 499.2 | Optional |
| | 14 | 9984.0 | 499.2 | Optional |
| | 15 | 9484.8 | 1354.97 | Optional |

| | | | | |
|---|---|---|---|---|
| ^{a} Note that bands indicate a sequence of adjacent HRP UWB center frequencies band 0 in the sub-gigahertz channel, band 1 has the low-band HRP UWB channels, and band 2 has the high-band channels. | | | | |

In an embodiment, at least one of the channels in Table 1 may be allocated as a UWB channel supported by UWB transceivers 130b and 230b. For example, channel number 5 and/or channel number 9 in Table 1 may be allocated as a UWB channel.

NB communication may support at least one NB channel with a narrower bandwidth than a UWB channel.

In an embodiment, an NB channel may be a sub-channel of one of candidate UWB channels allocated for UWB communication. As described above, an example of the candidate UWB channels allocated for UWB communication may be given as illustrated in Table 1 above.

As illustrated in Table 1 above, candidate UWB channels mainly have a bandwidth of 500MHz or larger. Therefore, use of a candidate UWB channel as it is is disadvantageous in terms of power spectral density (energy detection). Accordingly, it may be necessary to divide the UWB channel into a plurality of sub-channels (NB channels). For example, an NB channel needs to be used for device discovery (or advertisement) and/or connection setup.

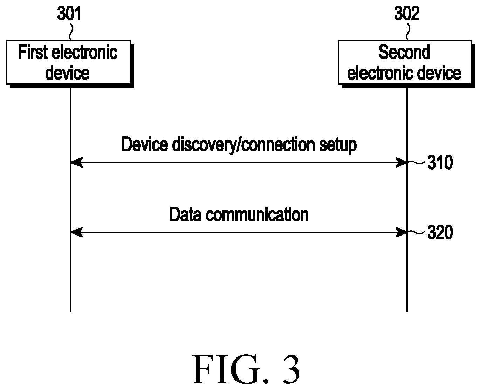

FIG. 3 illustrates a method for performing communication between a plurality of electronic devices according to an embodiment of the disclosure.

A first electronic device 301 and a second electronic device 302 of FIG. 3 may be, for example, the electronic devices of FIG. 1 or FIG. 2.

Referring to FIG. 3, the first electronic device 301 and the second electronic device 302 may perform a device discovery/connection setup procedure 310 and a data communication procedure 320. The device discovery/connection setup procedure 310 and the data communication procedure 320 may be managed or controlled by the MAC layer (entity) of an electronic device.

### (1) Device discovery/connection setup procedure

In the disclosure, the device discovery/connection setup procedure 310 may be a preliminary procedure performed before the data communication procedure 320. In an embodiment, the device discovery/connection setup procedure 310 may be performed via OOB communication (channel), NB communication (channel), and/or UWB communication (channel).

The device discovery/connection setup procedure 310 may include at least one of the following operations.
- Device discovery operation: an operation in which an electronic device searches for (discovers) another UWB device. The device discovery operation may include transmitting/receiving an advertisement message. In the disclosure, the device discovery operation may be referred to as a discovery operation or an advertising operation.
- Connection setup operation: an operation in which the two electronic devices establish a connection. The connection setup operation may include transmitting/receiving a connection request message and a connection confirmation message. The connection (channel) established through the connection setup operation may be used to establish and control a UWB session for data communication. For example, parameters for establishing a UWB session (e.g., UWB capability parameters (controlee capability parameter), UWB configuration parameters, and session key-related parameters) may be negotiated between the two electronic devices through a secure channel established through the connection setup operation.

### (2) Data communication procedure

In the disclosure, the data communication procedure 320 may be a procedure of transmitting and receiving data using UWB communication. In an embodiment, the data communication procedure may be performed using UWB communication or NB communication.

The data communication procedure 320 may include at least one of the following operations.
- UWB ranging operation: an operation in which an electronic device performs UWB ranging with another electronic device using a preset UWB ranging scheme (e.g., OWR, SS-TWR, or DS-TWR). In an embodiment, the UWB ranging operation may include a ToF measurement operation and/or an AoA measurement operation.
- Transaction operation: an operation in which an electronic device exchanges service data with another electronic device.

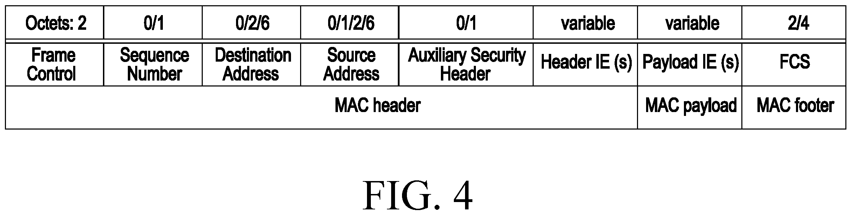

FIG. 4 illustrates the structure of a UWB MAC frame according to an embodiment of the disclosure.

In the embodiment of FIG. 4, the UWB MAC frame may follow, for example, the structure of a MAC frame in IEEE 802.15.4z. In the disclosure, a UWB MAC frame may be referred to shortly as a MAC frame or a frame. In an embodiment, the UWB MAC frame may be used to convey UWB data (e.g., a UWB message, a ranging message, control information, service data, application data, transaction data, and so on).

Referring to FIG. 4, the UWB MAC frame may include a MAC header (MHR), MAC payload, and/or a MAC footer (MFR).

### (1) MAC header

The MAC header may include a Frame Control field, a Sequence Number field, a Destination Address field, a Source Address field, an Auxiliary Security Header field, and/or at least one Header IE field. According to an embodiment, some fields may not be included in the MAC header.

In an embodiment, the Frame Control field may include a Frame Type field, a Security Enabled field, a Frame Pending field, an AR field, a PAN ID Compression field, a Sequence Number Suppression field, an IE Present field, a Destination Addressing Mode field, a Frame Version field, and/or a Source Addressing Mode field. Each field is described below.

The Frame Type field may indicate the type of the frame. In an embodiment, the type of the frame may include data type and/or multipurpose type.

The Security Enabled field may indicate whether the Auxiliary Security Header field is present. The Auxiliary Security Header field may include information required for security processing.

The Frame Pending field may indicate whether a device transmitting the frame has more data for a recipient. In other words, the Frame Pending field may indicate whether there is a pending frame for the recipient.

The AR field may indicate whether an acknowledgment of reception of the frame is required from the recipient.

The PAN ID Compression field may indicate whether a PAN ID field is present.

The Sequence Number Suppression field may indicate whether the Sequence Number field is present. The Sequence Number field may indicate a sequence identifier for the frame.

The IE Present field may indicate whether a Header IE field and a Payload IE field are included in the frame.

The Destination Addressing Mode field may indicate whether the Destination Address field includes a short address (e.g., 16 bits) or an extended address (e.g., 64 bits). The Destination Address field may indicate the address of the recipient of the frame.

The Frame Version field may indicate the version of the frame. For example, the Frame Version field may be set to a value indicating IEEE std 802.15.4z-2020.

The Source Addressing Mode field may indicate whether the Source Address field is present, and when the Source Address field is present, whether the Source Address field includes a short address (e.g., 16 bits) or an extended address (e.g., 64 bits). The Source Address field may indicate the address of the originator of the frame.

### (2) MAC payload

The MAC payload may include at least one Payload IE field. In an embodiment, the Payload IE field may include a Vendor Specific Nested IE. In an embodiment, the Payload IE field may include a Payload IE field of a UWB message or a control message.

### (3) MAC footer

The MAC footer may include an FCS field. The FCS field may include a 16-bit CRC or a 32-bit CRC.

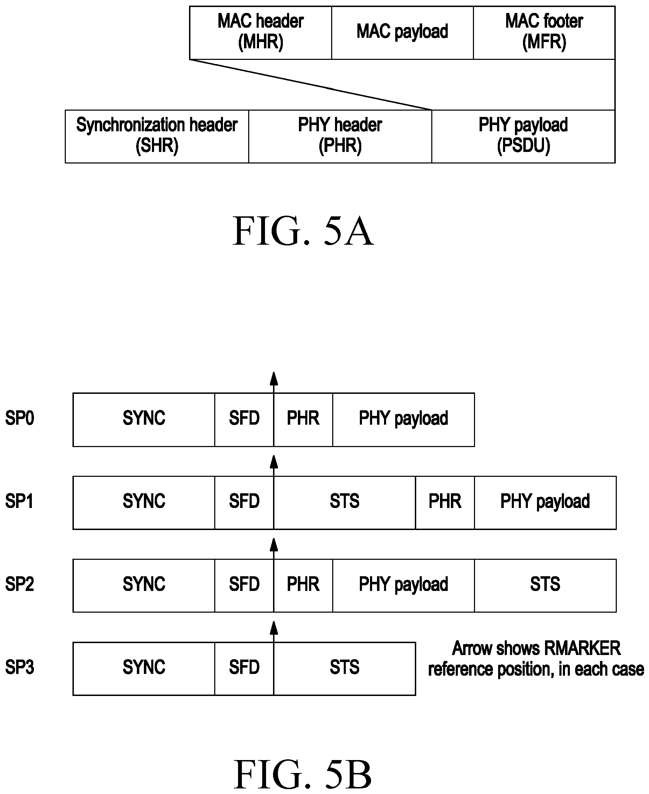

FIGS. 5A and 5B illustrate the structure of a UWB PHY packet according to an embodiment of the disclosure.

FIG. 5A illustrates an exemplary structure of a UWB PHY packet to which an STS packet configuration is not applied, and FIG. 5B illustrates an exemplary structure of a UWB PHY packet to which an STS packet configuration is applied. In the disclosure, a UWB PHY packet may be referred to as a PHY packet, a PHY PDU (PPDU), or a frame.

Referring to FIG. 5A, the PPDU may include a synchronization header (SHR), a PHY header (PHR), and PHY payload (PSDU). The PSDU may include a MAC frame, and as illustrated in FIG. 4, the MAC frame may include a MAC header (MHR), MAC payload, and/or a MAC footer (MFR). In the disclosure, a synchronization header part may be referred to as a preamble, and a part including the PHY header and the PHY payload may be referred to as a data part.

The synchronization header may be used for synchronization for signal reception and include a SYNC field and a start-of-frame delimiter (SFD).

The SYNC field may be a field including a plurality of preamble symbols used for synchronization between a transmission device and a reception device. The preamble symbols may be configured through one of predefined preamble codes.

The SFD field may be a field indicating the end of the SHR and the start of the data field.

The PHY header may provide information about the configuration of the PHY payload. For example, the PHY header may include information about the length of the PSDU, information indicating whether the current frame is an RFRAME, and so on.

The PHY layer of a UWB device may include an optional mode to provide a reduced on-air time for a high-density/low-power operation. In this case, the UWB PHY packet may include an encrypted sequence (i.e., STS) to increase the integrity and accuracy of a ranging measurement timestamp. The STS may be included in the STS field of the UWB PHY packet and used for security ranging.

Referring to FIG. 5B, for STS packet (SP) configuration 0 (SP0), the STS field is not included in a PPDU (SP0 packet). For SP configuration 1 (SP1), the STS field is located immediately after the SFD field and before the PHR field (SP1 packet). For SP configuration 2 (SP2), the STS field is located after the PHY payload (SP2 packet). For SP configuration 3 (SP3), the STS field is located immediately after the SFD field, and the PPDU does not include the PHR and the data field (PHY payload) (SP3 packet). That is, for SP3, the PPDU does not include the PHR and the PHY payload.

In the embodiment of FIG. 5B, each UWB PHY packet may include an RMARKER for defining a reference time, and the RMARKER may be used to obtain a transmission time, a reception time, and/or a time period of a ranging message (frame) in the UWB ranging procedure.

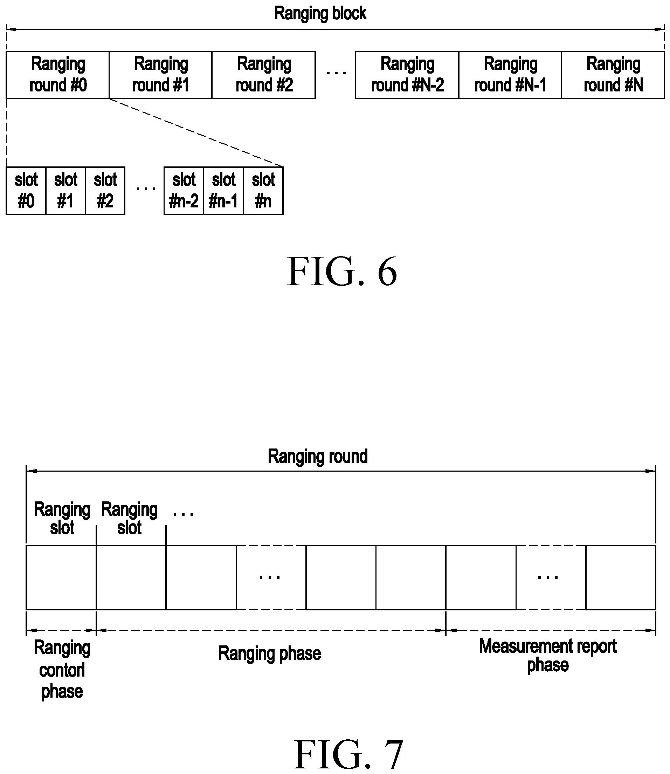

FIG. 6 illustrates an exemplary structure of a ranging block and round used for UWB ranging according to an embodiment of the disclosure.

In the disclosure, a ranging block refers to a time period for ranging. A ranging round (any one of Raging round #0 to Raging round #N) may be a period of a sufficient duration to complete one entire ranging-measurement cycle (ranging cycle) involving a set of UWB devices participating in a ranging exchange. A ranging slot (any one of slot #0 to slot #n) may be a period of a sufficient duration for transmission of at least one ranging frame (RFRAME) (e.g., a ranging start/response/final message or the like).

As illustrate in FIG. 6, one ranging block may include at least one ranging round, and each ranging round may include at least one ranging slot.

When the ranging mode is a block-based mode, a mean time between successive ranging rounds may be a constant. Alternatively, when the ranging mode is an interval-based mode, a time between successive ranging rounds may be changed dynamically. In other words, the interval-based mode may adopt a time structure with an adaptive spacing.

The number of slots included in a ranging round and the duration of the ranging round may be changed between ranging rounds.

In the disclosure, a ranging block, a ranging round, and a ranging slot may be referred to shortly as a block, a round, and a slot, respectively.

FIG. 7 illustrates an exemplary structure of a ranging round used for UWB ranging according to an embodiment of the disclosure.

As illustrated in FIG. 7, one ranging round may include a plurality of ranging slots. A ranging control phase (RCP), a ranging phase (RP), and a measurement report phase (MRP) may be performed within the ranging round.

In the RCP, a UWB device acting as a controller may transmit (or broadcast) an RCM in the ranging round. The RCM may be a message transmitted by the controller in a first slot (e.g., slot 0) of the ranging round to configure ranging parameters.

In the RP, messages for UWB ranging may be transmitted/received in the ranging round. The RP may include at least one of a ranging initiation phase (RIP), a ranging response phase (RRP), and a ranging final phase (RFP).

The RIP may be a phase in which at least one initiator transmits at least one ranging initiation message, the RRP may be a phase in which at least one responder transmits at least one response, and the RFP may be a phase in which the initiator transmits at least one ranging final message to the at least one responder.

In the MRP, a ranging measurement and related service information may be exchanged in the ranging round.

According to an embodiment, the RCP may be performed in the first ranging slot of the ranging round. According to an embodiment, the RCP may be performed in at least one ranging slot.

According to an embodiment, the RP may be performed in ranging slots from a second ranging slot to a K^{th} ranging slot (where K is a natural number equal to or larger than 3) in the ranging round. According to an embodiment, the RP may be performed in at least one ranging slot.

According to an embodiment, the MRP may be performed in ranging slots from a (K+1)^{th} ranging slot to an L^{th} ranging slot (where L is a natural number equal to or larger than 5) in the ranging round. According to an embodiment, the MRP may be performed in at least one ranging slot.

A UWB device that performs UWB ranging may transmit a UWB packet by occupying at least one ranging slot. According to an embodiment, ranging slot allocation information may be included in an RCM transmitted in the RCP.

To secure a packet processing time and avoid interference, the length of a ranging slot may be implemented to be greater than the length of a packet. Although a transmission time in a ranging slot is basically a slot start time, it may be adjusted through an offset.

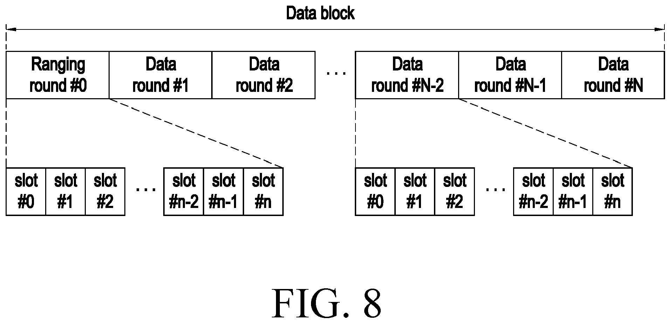

FIG. 8 illustrates an exemplary structure of a data block and round used for UWB ranging according to an embodiment of the disclosure.

In the disclosure, a data block refers to a time period for ranging and a transaction. The transaction may be an operation in which a UWB device exchanges data with another UWB device. For example, a data block may include one ranging round (Raging round #0) and N data rounds (Data round #1 to Data round #N).

In FIG. 8, although a data block includes one ranging round and N data rounds in an example of the disclosure, embodiments of the disclosure are not limited thereto, and each of the numbers of ranging rounds and data rounds included in the data block may be implemented to vary.

A ranging round is a period of a sufficient duration to complete one entire ranging measurement cycle (ranging cycle) involving a set of UWB devices participating in a ranging exchange. A data round may be a period of a sufficient duration to complete one cycle involving a set of UWB devices participating in a data exchange.

A ranging round (e.g., Ranging round #0) may include a plurality of first ranging slots (slot #0 to slot #n), and a data round (e.g., Data round #N-2) may include a plurality of second ranging slots (slot #0 to slot #n).

Each of the plurality of first ranging slots may be a period of a sufficient duration for transmission of at least one RFRAME (e.g., a ranging initiation/response/final message or the like). Each of the plurality of second ranging slots may be a period of a sufficient duration for transmission of at least one data frame.

When a data block includes at least one ranging round and a plurality of data rounds as illustrated in FIG. 8, a UWB device may use ranging information in transmitting data in real time (e.g., video streaming or file transfer) to a plurality of other UWB devices.

According to an embodiment, the UWB device may efficiently transmit data in the data block of FIG. 8 using feedback information obtained through an NB channel.

In the disclosure, the UWB device may transmit data through a UWB channel, obtain feedback information for the data from at least one other UWB device through an NB channel, and retransmit the data to the other UWB device through a UWB channel based on the feedback information.

In the disclosure, the scheme of transmitting data through a UWB channel, obtaining feedback information for the data from at least one other UWB device through an NB channel, and retransmitting the data to the other UWB device requiring data retransmission based on the feedback information by a UWB device may be referred to as "retransmission-based data transmission."

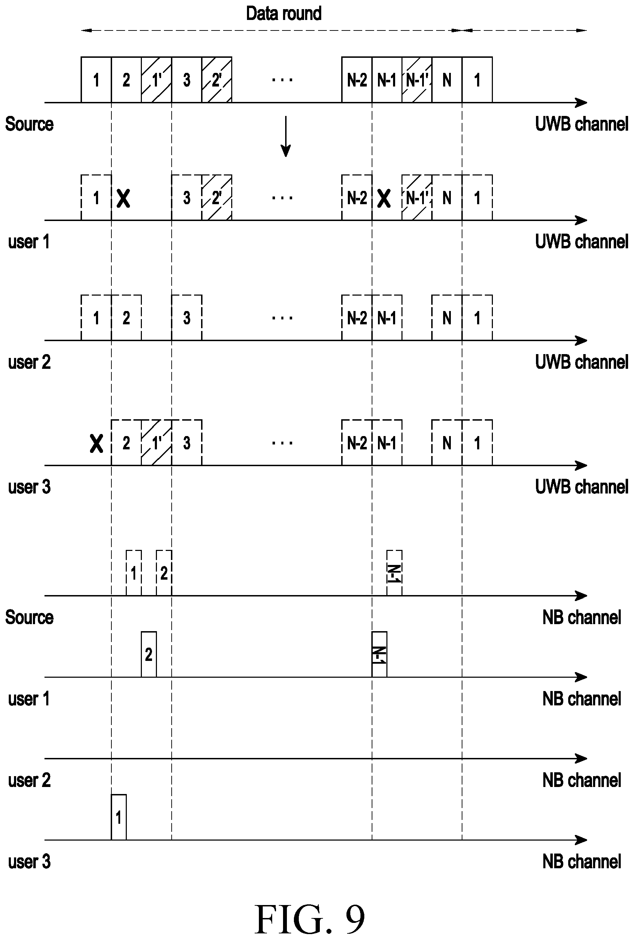

"Retransmission-based data transmission" according to embodiments of the disclosure will be described in detail with reference to FIGS. 9 to 11.

In the disclosure, a scheme in which a UWB device transmits forward error correction (FEC)-encoded data through a UWB channel, obtains feedback information for the data from at least one other UWB device through an NB channel, and determines a code rate for the data based on the feedback information may be referred to as "FEC-based data transmission."

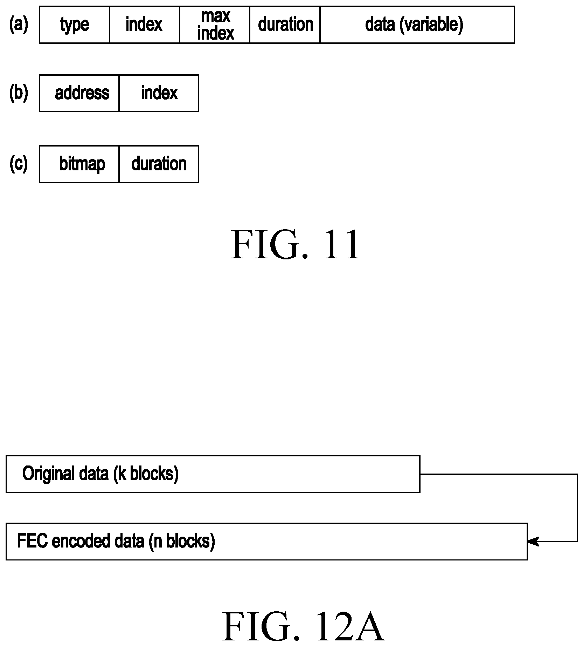

"FEC-based data transmission" according to an embodiment of the disclosure will be described in detail with reference to FIGS. 12A to 13.

FIG. 9 illustrates an exemplary retransmission-based data transmission operation of a UWB device according to an embodiment of the disclosure.

Referring to FIG. 9, a first UWB device may serve as a source for transmitting data. The first UWB device (source) may transmit data to a second UWB device (user 1), a third UWB device (user 2), and a fourth UWB device (user 3), respectively. According to an embodiment, the first UWB device (source) may transmit real-time data, such as video streaming and/or file transfer, to the second UWB device (user 1), the third UWB device (user 2), and the fourth UWB device (user 3), respectively.

The first UWB device (source) may transmit N data 1 to N and/or retransmission data 1', 2', and N-1' in one data round through a UWB channel to the second UWB device (user 1), the third UWB device (user 2), and the fourth UWB device (user 3), respectively.

According to an embodiment, each of the N data may include at least one of service data, application data, or transaction data. According to an embodiment, each of the N data may include at least one data frame.

When the fourth UWB device (user 3) fails to receive first data 1 from the first UWB device (source), the fourth UWB device (user 3) may transmit a feedback indicating the reception failure of the first data 1 to the first UWB device (source) through an NB channel. The first UWB device (source) may transmit retransmission data 1' corresponding to the first data 1 through the UWB channel to the fourth UWB device (user 3) based on the feedback from the fourth UWB device (user 3).

When the second UWB device (user 1) fails to receive second data 2 from the first UWB device (source), the second UWB device (user 1) may transmit a feedback indicating the reception failure of the second data 2 to the first UWB device (source) through the NB channel. The first UWB device (source) may transmit retransmission data 2' corresponding to the second data 2 to the second UWB device (user 1) through the UWB channel based on the feedback from the second UWB device (user 1).

When the second UWB device (user 1) fails to receive (N-1)^{th} data N-1 from the first UWB device (source), the second UWB device (user 1) may transmit a feedback indicating the reception failure of the (N-1)^{th} data N-1 to the first UWB device (source) through the NB channel. The first UWB device (source) may transmit retransmission data N-1' corresponding to the (N-1)^{th} data N-1 to the second UWB device (user 1) through the UWB channel based on the feedback from the second UWB device (user 1).

In FIG. 9, the first UWB device (source) may retransmit data that another UWB device has failed to receive through the UWB channel immediately (or at a set time) to the other UWB device through a UWB channel based on feedback information received from the other UWB device through an NB channel.

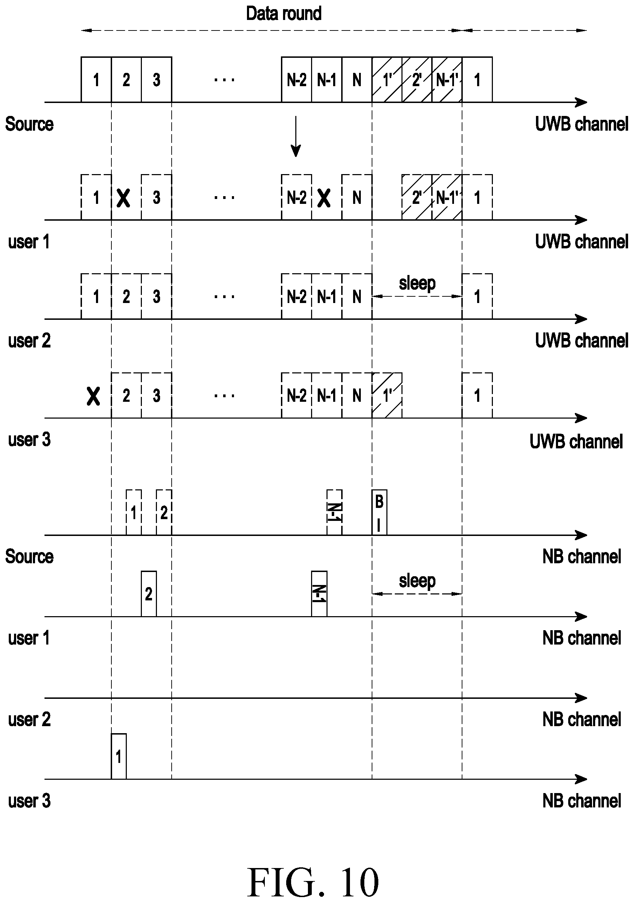

FIG. 10 illustrates another exemplary retransmission-based data transmission operation of a UWB device according to an embodiment of the disclosure.

Referring to FIG. 10, a first UWB device may serve as a source for transmitting data. The first UWB device (source) may transmit data to a second UWB device (user 1), a third UWB device (user 2), and a fourth UWB device (user 3), respectively. According to an embodiment, the first UWB device (source) may transmit real-time data, such as video streaming and/or file transfer, to the second UWB device (user 1), the third UWB device (user 2), and the fourth UWB device (user 3), respectively.

The first UWB device (source) may transmit N data 1 to N and/or retransmission data 1', 2', and N-1' in one data round through a UWB channel to the second UWB device (user 1), the third UWB device (user 2), and the fourth UWB device (user 3), respectively.

According to an embodiment, each of the N data may include at least one of service data, application data, or transaction data. According to an embodiment, each of the N data may include at least one data frame.

When the fourth UWB device (user 3) fails to receive first data 1 from the first UWB device (source), the fourth UWB device (user 3) may transmit a feedback indicating the reception failure of the first data 1 to the first UWB device (source) through an NB channel.

When the second UWB device (user 1) fails to receive second data 2 from the first UWB device (source), the second UWB device (user 1) may transmit a feedback indicating the reception failure of the second data 2 to the first UWB device (source) through the NB channel.

When the second UWB device (user 1) fails to receive (N-1)^{th} data N-1 from the first UWB device (source), the second UWB device (user 1) may transmit a feedback indicating the reception failure of the (N-1)^{th} data N-1 to the first UWB device (source) through the NB channel.

The first UWB device (source) may transmit retransmission data during a retransmission period after transmitting all of the N data in the data round through the UWB channel based on the feedback information received through the NB channel.

In FIG. 9, the first UWB device (source) may retransmit data that another UWB device has failed to receive through the UWB channel immediately (or at a set time) to the other UWB device through the UWB channel based on feedback information received from the other UWB device through the NB channel, whereas in FIG. 10, the first UWB device (source) may retransmit data that at least one UWB device has failed to receive during a retransmission period after transmitting all data.

The first UWB device (source) may identify data to be retransmitted based on the feedback information received from the second UWB device (user 1) and the fourth UWB device (user 3), and transmit bitmap information indicating the retransmission data to each of the second UWB device (user 1) to the fourth UWB device (user 3) through the NB channel.

The third UWB device (user 2), which has successfully received all N data 1 to N from the first UWB device (source), may receive the bitmap information indicating the retransmission data, identify that there is no retransmission data to be received from the first UWB device (source) based on the bitmap information, and transition to a sleep mode for power saving during the retransmission period of the first UWB device (source).

The fourth UWB device (user 3), which has fed back to the first UWB device (source) that it has failed to receive the first data 1 through the NB channel, may receive retransmission information 1' corresponding to the first data 1 from the first UWB device (source) through the UWB channel during the retransmission period.

The second UWB device (user 1), which has fed back to the first UWB device (source) that it has failed to receive the second data 2 and the (N-1)^{th} data N-1 through the NB channel, may receive retransmission data 2' corresponding to the second data 2 and retransmission information N-1' corresponding to the (N-1)^{th} data N-1 from the first UWB device (source) through the UWB channel during the retransmission period.

FIG. 11 illustrates an exemplary retransmission-based message format for a UWB device according to an embodiment of the disclosure.

FIG. 11(a) illustrates a message format (retransmission-based message format) of data transmitted and/or retransmitted by the first UWB device (source) to another UWB device through a UWB channel in FIGS. 9 and 10.

Referring to FIG. 11(a), the retransmission-based message format may include a type field, an index field, a max index field, a duration field, and a data field.

The type field indicates whether data is a retransmission-based data transmission or an FEC-based data transmission, the index field indicates a current data index (e.g., the second data 2), and the max index field indicates a maximum data index (e.g., the N^{th} data N). The duration field represents the time duration of the data, the data field includes the data, and the size of the data field may be variably adjusted not to exceed a slot size.

FIG. 11(b) illustrates a message format fed back from the second UWB device (user 1) or the fourth UWB device (user 3) to the first UWB device (source) through an NB channel in FIGS. 9 and 10.

Referring to FIG. 11(b), a feedback message may include an address field and an index field. The address field indicates the MAC address of a UWB device transmitting the feedback message, and the index field represents the index of data that the UWB device transmitting the feedback message has failed to receive.

FIG. 11(c) illustrates a message format of bitmap information transmitted by the first UWB device (source) to another UWB device through a UWB channel in FIG. 10.

Referring to FIG. 11(c), the bitmap information may include a bitmap field and a duration field. The bitmap field indicates a bitmap index of retransmission data, and the duration field represents the time duration of the retransmission data.

FIG. 12A is a diagram illustrating FEC-based data transmission according to an embodiment of the disclosure.

Referring to FIG. 12A, a UWB device may transmit FEC-encoded data larger than original data to another UWB device through a UWB channel. For example, the original data may include k blocks, and the FEC-encoded data may include n blocks (where n > k). According to an embodiment, a Reed-Solomon code and/or a Raptor code may be used for block-based coding.

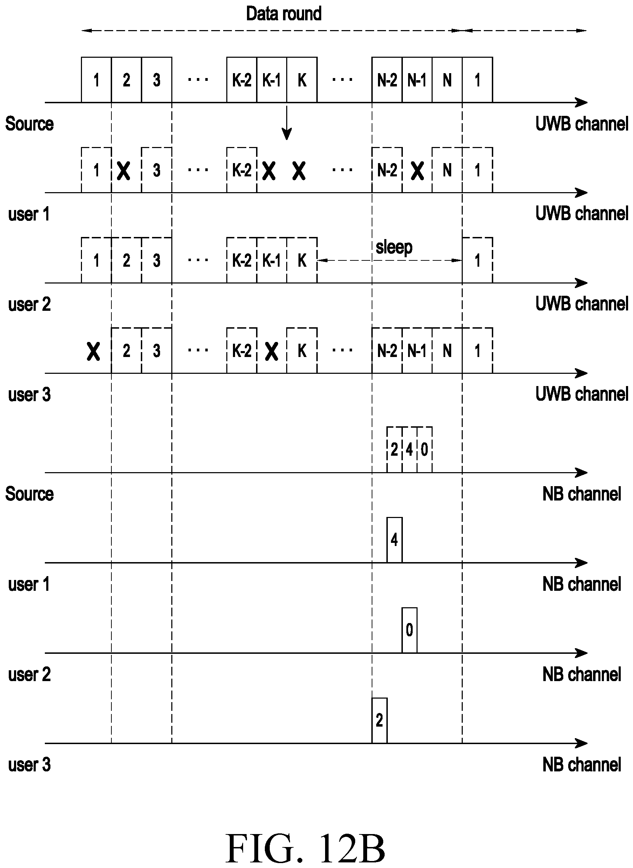

FIG. 12B illustrates an exemplary FEC-based data transmission operation of a UWB device according to an embodiment of the disclosure.

Referring to FIG. 12B, a first UWB device may serve as a source for transmitting data. The first UWB device (source) may transmit data to a second UWB device (user 1), a third UWB device (user 2), and a fourth UWB device (user 3), respectively. According to an embodiment, the first UWB device (source) may transmit real-time data, such as video streaming and/or file transfer, to the second UWB device (user 1), the third UWB device (user 2), and the fourth UWB device (user 3), respectively.

The first UWB device (source) may transmit N FEC-encoded data 1 to N in one data round through a UWB channel to the second UWB device (user 1), the third UWB device (user 2), and the third UWB device (user 2), respectively. According to an embodiment, original data may include K data (where N > K).

According to an embodiment, each of the N data may include at least one of service data, application data, or transaction data. According to an embodiment, each of the N data may include at least one data frame.

When the fourth UWB device (user 3) fails to receive first data 1 and (K-1)^{th} data K-1 from the first UWB device (source) through the UWB channel, the fourth UWB device (user 3) may feed back to the first UWB device (source) that two data ("2") were not received through an NB channel.

When the second UWB device (user 1) fails to receive second data 2, the (K-1)^{th} data K-1, K^{th} data K, and (N-1)^{th} data N-1 from the first UWB device (source) through the UWB channel, the fourth UWB device (user 3) may feed back to the first UWB device (source) that four data ("4") were not received, through the NB channel.

When the third UWB device (user 2) receives the K data corresponding to the original data from the first UWB device (source) through the UWB channel, the third UWB device (user 2) may feed back to the first UWB device (source) that it has received all data ("0"), through the NB channel.

The first UWB device (source) may adjust a data code rate for at least one of the second UWB device (user 1) to the fourth UWB device (user 3) based on the received feedback information.

According to an embodiment, the third UWB device (user 2), which has successfully received the K data corresponding to the original data from the first UWB device (source) through the UWB channel, may transition to the sleep mode for power saving after receiving the K data.

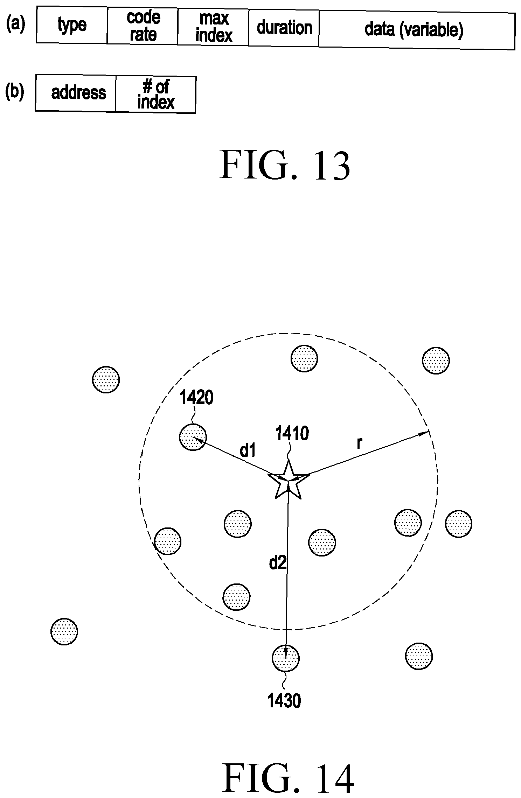

FIG. 13 illustrates an exemplary FEC-based message format for a UWB device according to an embodiment of the disclosure.

FIG. 13(a) illustrates a message format (FEC-based message format) of data transmitted by the first UWB device (source) to another UWB device through a UWB channel in FIG. 12B.

Referring to FIG. 13(a), the FEC-based message format may include a type field, a code rate field, a max index field, a duration field, and a data field.

The type field indicates whether data is a retransmission-based data transmission or an FEC-based data transmission, the code rate field indicates a code rate of the data, and the max index field indicates a maximum data index (e.g., the N^{th} data N). The duration field indicates the time duration of the data, the data field includes the data, and the size of the data field may be variably adjusted so as not to exceed a slot size.

FIG. 13(b) illustrates a message format fed back from the second UWB device (user 1) to the fourth UWB device (user 3) to the first UWB device (source) through the NB channel in FIG. 12B.

Referring to FIG. 11(b), the feedback message may include an address field and a # of index field. The address field indicates the MAC address of a UWB device transmitting the feedback message, and the # of index field indicates the number of data indexes that the UWB device transmitting the feedback message has failed to receive from the source.

FIG. 14 illustrates an exemplary ranging using operation of a UWB device according to an embodiment of the disclosure.

In FIG. 14, a UWB device (source) transmitting data may set data transmission coverage (e.g., a circle with a radius set to "r") to select a feedback on an NB channel. In the case of retransmission-based data transmission and/or FEC-based data transmission, inefficiency in data transmission may occur when a UWB device 1410 accepts all feedbacks on NB channels.

The UWB device 1410 may receive a feedback from a UWB device 1420 located within the data transmission coverage. The UWB device 1410 may not receive a feedback through an NB channel from the UWB device 1430 located outside the data transmission coverage.

According to an embodiment, the UWB device 1410 may perform ranging with another UWB device in a ranging round of the data block illustrated in FIG. 8, and measure (or determine) a distance between the UWB device 1410 and the other UWB device 1420 or 1430 based on a ranging result.

For example, the UWB device 1410 may set the data transmission coverage to "r" and receive a feedback through an NB channel from the first UWB device 1420 located within the data transmission coverage (r > d1).

For example, the UWB device 1410 may set the data transmission coverage to "r" and control not to receive a feedback through an NB channel from the second UWB device 1430 located outside the data transmission coverage (r < d2).

The UWB device 1410 may improve data throughput performance by receiving the feedback through the NB channel from the UWB device 1420 located within the data transmission coverage.

According to an embodiment, the UWB device 1410 may set a ranging cycle to (s+1) * data block duration (where s is the number of data blocks to skip).

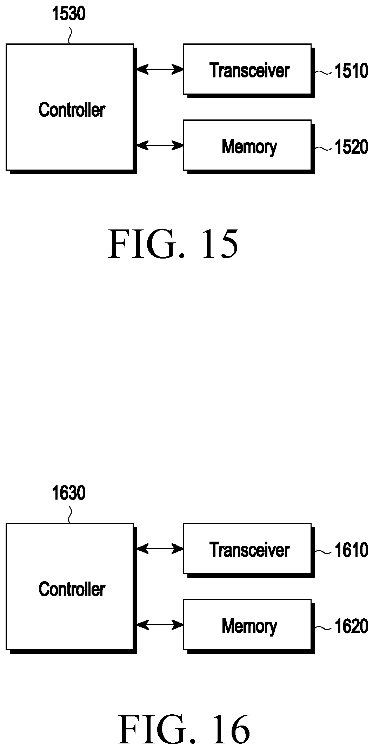

FIG. 15 illustrates the structure of a first UWB device according to an embodiment of the disclosure.

The first UWB device described with reference to FIGS. 1 to 14 may correspond to the electronic device 100 of FIG. 1, the first electronic device 210 of FIG. 2, the first electronic device 301 of FIG. 3, the source of FIG. 9, the source of FIG. 10, the source of FIG. 12B, or the first UWB device 1410 of FIG. 14. Referring to FIG. 15, the first UWB device may include a transceiver 1510, memory 1520, and a controller 1530.

According to the afore-described communication schemes of the first UWB device, the transceiver 1510, the controller 1530, and the memory 1520 of the first UWB device may operate. However, the components of the first UWB device are not limited to the above example. For example, the first UWB device may include more or fewer components than the components described above. In addition, the transceiver 1510, the controller 1530, and the memory 1520 may be implemented in the form of a single chip. Further, the controller 1530 may include one or more processors.

The transceiver 1510 collectively refers to a receiver of the first UWB device and a transmitter of the first UWB device, and may transmit and receive signals to and from other devices. To this end, the transceiver 1510 may include an RF transmitter that up-converts and amplifies the frequency of a transmission signal, and an RF receiver that low-noise-amplifies a received signal and down-converts the frequency of the amplified signal. However, this is only an example of the transceiver 1510, and the components of the transceiver 1510 are not limited to the RF transmitter and the RF receiver.

Further, the transceiver 1510 may receive a signal through a wireless channel and output the signal to the controller 1530, and transmit a signal output from the controller 1530 through a wireless channel.

The memory 1520 may store a program and data necessary for the operation of the first UWB device. Further, the memory 1520 may store control information or data included in a signal obtained by the first UWB device. The memory 1520 may include a storage medium such as ROM, RAM, hard disk, CD-ROM, and DVD, or a combination of the storage media. Further, the memory 1520 may be included in the controller 1530, not separately from the controller 1530.

The controller 1530 may control a series of processes so that the first UWB device may operate according to the above-described embodiments of the disclosure.

The controller 1530 may control data to be transmitted to a plurality of UWB devices in a data round of a data block through a UWB channel. The controller 1530 may control to receive first feedback information for the data from a second UWB device among the plurality of UWB devices through an NB channel. The controller 1530 may process the data based on the first feedback information.

According to an embodiment, the controller 1530 may identify that the second UWB device has failed to receive the data based on the first feedback information. According to an embodiment, the controller 1530 may retransmit the data to the second UWB device in the data round through the UWB channel.

According to an embodiment, the controller 1530 may transmit bitmap information indicating the index of the data retransmitted by the first UWB device through the NB channel.

According to an embodiment, the data transmitted by the first UWB device through the UWB channel may include a type field, an index field, a max index field, a duration field, and a data field. The type field may indicate that the data is a retransmission-based data transmission, the index field may indicate the index of the data, the max index field may indicate a maximum data index value, and the duration field may indicate the duration of the data.

According to an embodiment, the controller 1530 may receive second feedback information for the data from a third UWB device among the plurality of UWB devices through an NB channel.

According to an embodiment, each of the first feedback information and the second feedback information may include an address field and an index field. The address field may indicate the MAC address of the UWB device transmitting the feedback information. The index field may indicate the index of the data that the UWB device transmitting the feedback information has failed to receive.

According to an embodiment, the data transmitted by the first UWB device through the UWB channel may be FEC-encoded data.

According to an embodiment, the FEC-encoded data may include a type field, a code rate field, a max index field, a duration field, and a data field. The type field may indicate that the data is an FEC-based data transmission, the code rate field may indicate the code rate of the data, the max index field may indicate a maximum data index, and the duration field may indicate the duration of the data.

According to an embodiment, the first feedback information may include an address field and an index number field. The address field may indicate the MAC address of the second UWB device, and the index number field may indicate the number of indexes of data that the second UWB device has failed to receive.

According to an embodiment, the controller 1530 may adjust the code rate of the data based on the first feedback information.

According to an embodiment, the controller 1530 may identify data transmission coverage, and identify the distance between the first UWB device and the second UWB device through UWB ranging. When the distance between the first UWB device and the second UWB device is within the data transmission coverage, the controller 1530 may determine the first feedback information to be valid information.

FIG. 16 illustrates the structure of a second UWB device according to an embodiment of the disclosure.

The second UWB device described with reference to FIGS. 1 to 14 may correspond to the electronic device 100 of FIG. 1, the second electronic device 220 of FIG. 2, the second electronic device 302 of FIG. 3, a UWB device (e.g., any one of user 1 to user 3) of FIG. 9, a UWB device (e.g., any one of user 1 to user 3) of FIG. 10, a UWB device (e.g., any one of user 1 to user 3) of FIG. 12B, or the UWB device 1420 or 1430 of FIG. 14. Referring to FIG. 16, the second UWB device may include a transceiver 1610, memory 1620, and a controller 1630.

According to the afore-described communication schemes of the second UWB device, the transceiver 1610, the controller 1630, and the memory 1620 of the second UWB device may operate. However, the components of the second UWB device are not limited to the above example. For example, the second UWB device may include more or fewer components than the components described above. In addition, the transceiver 1610, the controller 1630, and the memory 1620 may be implemented in the form of a single chip. Further, the controller 1630 may include one or more processors.

The transceiver 1610 collectively refers to a receiver of the second UWB device and a transmitter of the second UWB device, and may transmit and receive signals to and from other devices. To this end, the transceiver 1610 may include an RF transmitter that up-converts and amplifies the frequency of a transmission signal, and an RF receiver that low-noise-amplifies a received signal and down-converts the frequency of the amplified signal. However, this is only an example of the transceiver 1610, and the components of the transceiver 1610 are not limited to the RF transmitter and the RF receiver.

Further, the transceiver 1610 may receive a signal through a wireless channel and output the signal to the controller 1630, and transmit a signal output from the controller 1630 through a wireless channel.

The memory 1620 may store a program and data necessary for the operation of the first UWB device. Further, the memory 1620 may store control information or data included in a signal obtained by the first UWB device. The memory 1620 may include a storage medium such as ROM, RAM, hard disk, CD-ROM, and DVD, or a combination of the storage media. Further, the memory 1620 may be included in the controller 1630, not separately from the controller 1630.

The controller 1630 may control a series of processes so that the second UWB device may operate according to the above-described embodiments of the disclosure.

The controller 1630 may control to receive data in a data round of a data block through a UWB channel from a first UWB device. The controller 1630 may control to transmit feedback information for the data to the first second UWB device through an NB channel.

When the feedback information indicates that the second UWB device has failed to receive the data, the controller 1630 may receive the data retransmitted in a data round through the UWB channel from the first UWB device.

According to an embodiment, the controller 1630 may receive bitmap information indicating the index of data retransmitted by the first UWB device through the NB channel from the first UWB device.

According to an embodiment, the feedback information may include an address field and an index field. The address field may indicate the MAC address of the second UWB device, and the index field may indicate the index of the data that the second UWB device has failed to receive.

According to an embodiment, the data transmitted by the first UWB device through the UWB channel may be FEC-encoded data.

In the specific embodiments of the disclosure described above, components included in the disclosure are expressed in singular or plural forms according to the presented specific embodiments. However, the singular or plural expressions are selected to suit a presented situation for convenience of description. The disclosure is not limited to singular or plural components, and even components expressed in plural may be singular. Even a component expressed in singular may include plural elements.

While specific embodiments have been described in the detailed description of the disclosure, various modifications are possible without departing from the scope of the disclosure. Therefore, the scope of the disclosure should not be limited to the described embodiments, but should be determined by the scope of the appended claims and their equivalents.

## Claims

1. A method for operating a first ultra wide band (UWB) device, comprising:
transmitting data to a plurality of UWB devices in a data round of a data block though a UWB channel;
receiving first feedback information for the data through a narrow band (NB) channel from a second UWB device among the plurality of UWB devices; and
processing the data based on the first feedback information.

2. The method of claim 1, further comprising:
identifying that the second UWB device fails to receive the data based on the first feedback information; and
retransmitting the data to the second UWB device in the data round through the UWB channel.

3. The method of claim 2, further comprising transmitting bitmap information indicating an index of the data retransmitted by the first UWB device through the NB channel.

4. The method of claim 1, wherein the data transmitted by the first device through the UWB channel includes a type field, an index field, a max index field, a duration field, and a data field, and
wherein the type field indicates that the data is a retransmission-based data transmission, the index field indicates an index of the data, the max index field indicates a maximum data index value, and the duration field indicates a duration of the data.

5. The method of claim 1, further comprising receiving second feedback information for the data through the NB channel from a third UWB device among the plurality of UWB devices.

6. The method of claim 5, wherein each of the first feedback information and the second feedback information includes an address field and an index field, and
wherein the address field indicates a MAC address of the UWB device transmitting the feedback information, and
wherein the index field indicates an index of data that the UWB device transmitting the feedback information fails to receive.

7. The method of claim 1, wherein the data transmitted by the first UWB device through the UWB channel is FEC-encoded data.

8. The method of claim 7, wherein the data transmitted by the first device through the UWB channel includes a type field, a code rate field, a max index field, a duration field, and a data field, and
wherein the type field indicates that the data is an FEC-based data transmission, the code rate field indicates a code rate of the data, the max index field indicates a maximum data index value, and the duration field indicates a duration of the data.

9. The method of claim 7, wherein the first feedback information includes an address field and a number of indexes field, and
wherein the address field indicates a MAC address of the second UWB device, and
wherein the number of indexes field indicates a number of indexes of data that the second UWB device fails to receive.

10. The method of claim 9, further comprising adjusting a code rate of the data based on the first feedback information.

11. The method of claim 1, further comprising:
identifying data transmission coverage;
identifying a distance between the first UWB device and the second UWB device through UWB ranging; and
determining the first feedback information to be valid information, when the distance between the first UWB device and the second UWB device is within the data transmission coverage.

12. A method for operating a second ultra wide band (UWB) device, comprising:
receiving data from a first UWB device in a data round of a data block through a UWB channel; and
transmitting feedback information for the data to the first UWB device through a narrow band (NB) channel.

13. The method of claim 12, further comprising, when the feedback information indicates that the second UWB device fails to receive the data, receiving the data retransmitted from the first UWB device in the data round through the UWB channel.

14. A first ultra wide band (UWB) device comprising:
a transceiver; and
a controller connected to the transceiver and controlling the transceiver,
wherein the controller is configured to:
transmit data to a plurality of UWB devices in a data round of a data block though a UWB channel;
receive first feedback information for the data through a narrow band (NB) channel from a second UWB device among the plurality of UWB devices; and
process the data based on the first feedback information.

15. A second ultra wide band (UWB) device comprising:
a transceiver; and
a controller connected to the transceiver and controlling the transceiver,
wherein the controller is configured to:
receive data from a first UWB device in a data round of a data block through a UWB channel; and
transmit feedback information for the data to the first UWB device through a narrow band (NB) channel.
